# EUROPEAN PATENT SPECIFICATION

(11) **EP 3 301 322 B1**
(45) Date of publication and mention of the grant of the patent: **14.07.2021**
(21) Application number: 17020412.7
(22) Date of filing: 20.12.2013
(51) Int. Cl.: F16G 5/16

(54) **DRIVE BELT PROVIDED WITH A RING SET WITH STEEL RINGS HAVING A NITRIDE LAYER**
TREIBRIEMEN MIT EINEM RINGSET MIT STAHLRINGEN MIT EINER NITRIDSCHICHT
COURROIE D'ENTRAÎNEMENT POURVUE D'UN ENSEMBLE D'ANNEAUX AVEC DES ANNEAUX D'ACIER PRÉSENTANT UNE COUCHE DE NITRURE

(30) Priority: 27.12.2012 NL 1039974
(43) Date of publication of application: 04.04.2018
(62) Divisional of application: 13826736.4
(73) Proprietor: Robert Bosch GmbH, 70442 Stuttgart (DE)
(72) Inventor: Pennings, Bert, 5052CH Goirle (NL)
(74) Representative: Plevier, Gabriël Anton Johan Maria

(56) References cited:
- EP-A1- 1 072 815
- EP-A2- 1 055 739
- JP-A- 2002 038 251

## Description

The present disclosure relates to a drive belt for use in the well-known pulley-type continuously variable transmission or CVT that is typically applied in motor vehicles. One well known type of drive belt is described in detail in EP-A-1 403 551 and is also referred to in the art as push belt. The known drive belt includes a multitude of steel segments that are provided with at least one, but typically two recesses, each recess accommodating a ring set of the drive belt, which ring sets are each composed of a number of mutually, concentrically nested flexible steel rings. In the art, the steel segments are also referred to as transverse elements, the steel rings as hoops, loops or endless bands and the ring set as an endless tensile means or a carrier. In the present type drive belt the transverse elements are not connected to the ring sets, but rather slide along the circumference thereof during operation in the CVT. Also the individual rings of the ring sets slide relative to one another during operation.

For the present drive belt application thereof, a ring is produced from maraging steel, which type of steel combines a/o the mechanical characteristics of great tensile and (bending) fatigue strength with a relatively favourable possibility to process the steel from sheet-shaped base material towards the desired shape and material properties of the end-product rings. These desired material properties comprise a fair hardness of the ring core material, for combining the characteristics of a great tensile strength together with a sufficient elasticity and ductility to allow longitudinal bending of the steel ring, and a much harder outer surface layer, for providing wear resistance to the steel ring. Further, a considerable compressive residual stress is applied to the outer surface layer of the steel ring, for providing a high resistance against metal fatigue. This latter feature is of particular significance, since the steel ring is subjected to numerous load and bending cycles during the service life of the drive belt in the transmission.

The overall manufacturing method for such drive belts, including the heat treatment of the steel ring components thereof, has become well known in the art. An important part of the overall manufacturing method is the heat treatment of the steel rings, which heat treatment includes the process steps of precipitation hardening and of nitriding thereof.

Precipitation hardening is also known as aging and is realised through heating the steel rings to a temperature exceeding 400 degrees Celsius ("°C"), at which temperature microscopic inter-metallic precipitates incubate and grow at random locations throughout the ring material. As the precipitates grow, the hardness of the ring material increases until, generally speaking, a maximum hardness value is reached, after which the hardness of the ring material typically starts to decrease again (so-called "over-aging"). To prevent (severe) oxidation of the outer surface of the steel rings, precipitation hardening is normally performed in an inert or a reducing process atmosphere, such as nitrogen gas or nitrogen gas with some hydrogen gas mixed-in.

Nitriding provides the steel rings with an additionally hardened and, moreover, compressively (pre-)stressed surface layer. In nitriding, at least in the typically applied gas-soft nitriding variant thereof, the steel rings are kept in an ammonia gas (NH3) containing process atmosphere at a temperature of, likewise, more than 400°C. At such temperatures, the ammonia molecules dissociate at the outer surface of the steel rings, forming hydrogen gas and nitrogen atoms, which latter nitrogen atoms enter into the crystal lattice of the ring material. As the nitriding process continues, the nitrogen atoms move away from the outer surface into the ring material by diffusion, thus providing the steel ring with a nitrided surface layer of increasing thickness.

It is noted that the surface compressive residual stress is considered an essential feature of the steel ring in the present drive belt application thereof, because it wholly or partly compensates for the tensile stress resulting from the bending and stretching thereof under tension, which tensile stress concentrates in the surface layer of the ring. In particular, it is considered that by the compressive residual stress, i.e. by the provision of the nitride layer, the type of fatigue fracture that initiates and/or grows from surface defects, such as dents or microscopic cracks, is effectively suppressed and the fatigue strength of the steel ring is greatly improved. In this respect, the common general knowledge provides that the higher the surface compressive residual stress is, the higher the fatigue strength will be, provided that, during operation of the drive belt, the resulting tensile stress in the core of the steel ring does not exceed the elastic limit of the ring material.

EP 1 055 739 A2 discloses a ring set for a drive belt according to the preamble of claim 1. Other ring sets are known from JP 2002 038251 A and EP 1 072 815 A1.

Applicant has conducted detailed and extensive investigations regarding the effect of several of the many parameters that have an influence on the heat treatment of the steel ring, in particular in terms of the ultimate fatigue strength thereof. The aim of these investigations was to find the optimum settings of the nitriding process (i.e. nitriding temperature, duration and process atmosphere composition), in particular in terms of the stability and cost effectiveness thereof in mass manufacture. These investigations provided a wealth of experimental data, which lead applicant to a surprising discovery. In particular, applicant was able to construct from such data that the above-mentioned common general knowledge is, in fact, not applicable to the steel ring components of the drive belt, at least not directly without any further consideration.

To applicant's surprise, when a heat treated steel ring is subjected to the relatively simple and common place tensile strength test, instead of the more intricate pull-pull fatigue test that is normally performed to evaluate the (anticipated) performance of the steel ring in the drive belt application, the fractured surface showed zones with the characteristics of a brittle fracture. These brittle fracture parts of the overall fractured surfaces originate in the nitride layer and extend towards a respective outer surface of the steel ring. Even more revealing was the finding that the extent, i.e. the layer thickness of the brittle fracture parts is directly correlated to the thickness of the nitride layer.

The present disclosure represents a novel insight that has been derived from these findings. In particular, the mere occurrence of the brittle fracture suggested to applicant that the ductility of the material of the steel ring may be less than optimal, at least for the present drive belt application thereof. It was experimentally determined by applicant that, if the brittle fracture layer exceeds a thickness of 10 microns, the fatigue strength of the steel ring shows a substantially decline, at least in case of the industry standard steel ring having a thickness of between 150 and 200 microns, typically about 185 microns. Although the fatigue strength was found to continue to improve as the thickness of the brittle fracture layer is reduced below 10 microns, this latter improvement was found to be much smaller than the said decline thereof. Still, in a preferred embodiment of the steel ring according to the present disclosure, the brittle fracture (layer) is completely absent, which was found to occur if the steel ring is produced with a surface hardness of less than 750 HV0.1.

Additionally, the investigations revealed that the fatigue strength of the steel ring per se does not necessarily decrease as the surface compressive residual stress decreases. In fact, it was experimentally determined by applicant that, if a compressive residual stress of between 350 MPa and 650 MPa (i.e. a residual stress of minus ("-") 350 MPa to minus 650 MPa) is realised at the surface of the steel ring by the heat treatment thereof, the resulting fatigue strength thereof is entirely satisfactory, at least in the drive belt application thereof. Apparently, the conventionally applied compressive residual stress levels of more than 800 MPa, up to 1400 MPa are not necessarily required to achieve the required fatigue strength of the steel ring.

It is presently hypothesized that the conventional high compressive residual stress is useful for another purpose, such as for providing wear resistance, which is, however, of relevance only for the innermost steel ring of the ring set whereof the radially inner surface is in direct contact with the transverse elements. Possibly also the outermost steel ring of the ring set may benefit from a high compressive residual stress, because this radially outer surface of this ring arrives in contact with the transverse elements as well, although to a lesser extent. Accordingly, the present disclosure relates to the ring set whereof the steel rings that are located in-between the innermost and the outermost ring of the ring set are provided with a compressive residual stress of less than 650 MPa, preferably less than 600 MPa.

These compressive residual stress levels were found to be most easily achieved in combination with a thickness of the nitride layer of the steel rings of between 10 and 18 microns. Generally speaking, it is thus aimed for a nitride layer thickness that amounts to between 5% and 10% of the total (radial) thickness of the steel ring.

Additionally, at least the radially inner surface of the radially innermost steel ring, but preferably also the radially outer surface of the radially outermost steel ring of the rings set, is/are provided with a compressive residual stress of more than 750 MPa.

It is well-known that the nitride layer thickness is determined -and can thus be controlled by- the nitriding process parameter of the ammonia concentration and the hydrogen concentration in the process atmosphere and of the temperature and the duration of the nitriding process. In this respect, a favourable manufacturing method entails:
- nitriding of all of the steel rings by applying the same process parameters that provide the steel rings with a nitride layer of between 10 and 18 microns thickness and a compressive residual stress at the ring surface of between 350 and 650 MPa; and
- subjecting at least the radially inner surface of the radially innermost steel ring to an additional process step aimed to increase the compressive residual stress to a level of more than 750 MPa. For example, the well-known shot-peening process may be applied for this latter purpose.

The background for the above insights and the embodiments thereof in the steel ring component of the drive belt in accordance with the present disclosure is explained hereinafter with reference to the accompanying drawing figures, whereof:
figure 1 provides a schematically depicted example of the well-known continuously variable transmission provided with a drive belt,
figure 2 is a section of the drive belt shown in perspective,
figure 3 figuratively represents the presently relevant part of the known manufacturing method of the steel ring component of the drive belt,
figure 4 is a photographic representation of the fractured surface of the steel ring after it has been subjected to a tensile strength test,
figure 5 is a graph providing the dependency between the thickness of a nitride layer of the steel ring and the thickness of a brittle fracture layer that is obtained in a tensile strength test,
figure 6 is a graph plotting a measured hardness of the material of the steel ring in relation to a position relative to the outer surface thereof,
figure 7 is a graph illustrating the relation between the fatigue strength of the steel ring and the thickness of the brittle fracture layer obtained in the tensile strength test and
figure 8 is a graph providing the dependency between the thickness of a nitride layer of the steel ring and a residual stress level near the outer surface of such ring.

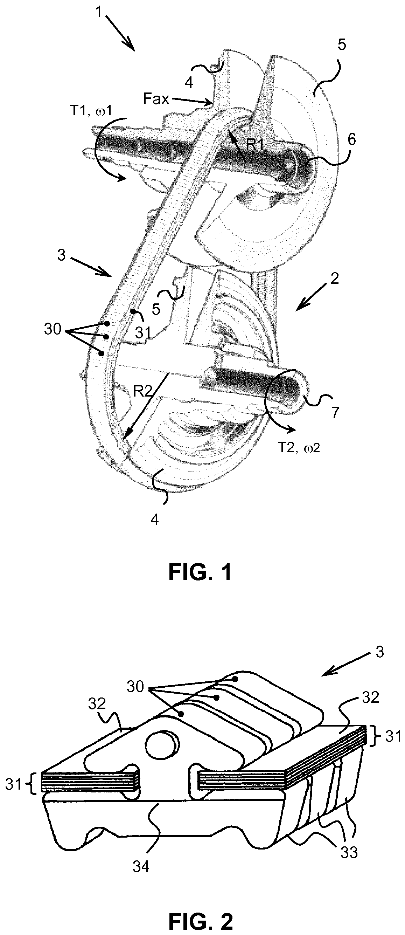

Figure 1 shows the central parts of a known continuously variable transmission or CVT that is commonly applied in the drive line of motor vehicles between the engine and the drive wheels thereof. The transmission comprises two pulleys 1, 2, each provided with two conical pulley discs 4, 5, where between a predominantly V-shaped grooves is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1. The transmission generally also comprises activation means that impose on the said at least one disc 4 an axially oriented clamping force Fax directed towards the respective other pulley disc 5 such that the belt 3 is clamped there between. Also, a (speed) ratio of the transmission between the rotational speed of the driven pulley 2 and the rotational speed of the driving pulley 1 is determined thereby.

An example of a known drive belt 3 is shown in detail in figure 2 in a section thereof, which belt 3 incorporates two ring sets 31 that are each composed of a set of -in this example- six thin and flat, i.e. band-like, flexible steel rings 32. The belt 3 further comprises a multitude of plate-like steel transverse elements 33 that are held together by the ring sets 31 that are each located in a respective recess of the transverse elements 33. The transverse elements 33 take-up the said clamping force Fax, such when an input torque Tin is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the steel rings 32 thereof are subjected to a cyclically varying tensile and bending stresses, i.e. a fatigue load. Typically the resistance against metal fatigue, i.e. the fatigue strength of the rings 32 thus determines the functional life span of the drive belt 3 at a given torque T to be transmitted thereby. Therefore, it has been a long standing general aim in the development of the drive belt manufacturing method to realise the required ring fatigue strength at a minimum combined material and processing cost.

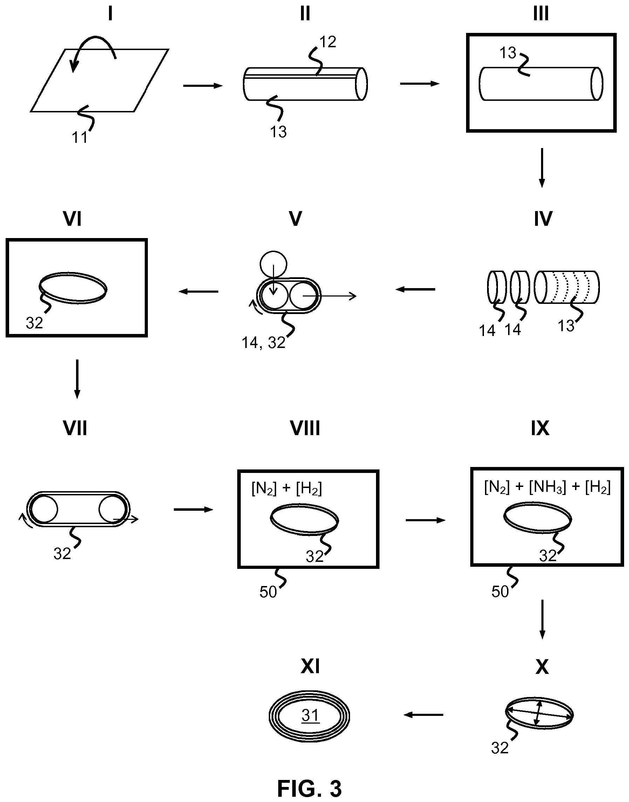

Figure 3 illustrates the presently relevant part of the known overall drive belt 3 manufacturing method, i.e. of the manufacturing of the steel ring 32 component thereof, wherein separate process steps are indicated by way of Roman numerals.

In a first process step I a thin sheet or plate 11 of base material that typically has a thickness in the range between 0.4 mm and 0.5 mm is bend into a cylindrical shape and the meeting plate ends 12 are welded together in a second process step II to form an open, hollow cylinder or tube 13. In a third step III of the process the tube 13 is annealed. Thereafter, in a fourth process step IV the tube 13 is cut into a number of annular hoops 14, which are subsequently -process step five V- rolled to reduce the thickness thereof to a value between 0.150 and 0.200 mm, typically to about 185 microns, while being elongated. After rolling the hoops 14 are usually referred to as steel rings 32. The steel rings 32 are then subjected to a further, i.e. ring annealing process step VI for removing the work hardening effect of the previous rolling process (i.e. step five V) by recovery and re-crystallisation of the ring material at a temperature considerably above 600 degree Celsius, e.g. about 800 degree Celsius. Thereafter, in a seventh process step VII, the steel rings 32 are calibrated, i.e. they are mounted around two rotating rollers and stretched to a predefined circumference length by forcing the said rollers apart. In this seventh process step VII, also an internal stress distribution is imposed on the steel rings 32.

Thereafter, the steel rings 32 are heat-treated in two process steps, namely an eighth process step VIII of precipitation hardening or aging and a ninth process step IX of gas-soft nitriding. More in particular, both such heat-treatments involve heating the steel rings 32 in an industrial oven or furnace containing a controlled gas atmosphere that typically is composed of nitrogen and some, e.g. about 5 volume-% of hydrogen for ageing and of nitrogen, hydrogen and ammonia for gas-soft nitriding. Both heat-treatments typically occur within the temperature range from 400 degrees Celsius to 500 degrees Celsius and can each last for about 45 to over 120 minutes in dependence on the base material of the steel rings 32 (i.e. the alloy composition of the maraging steel), as well as on the mechanical properties that are desired for the steel rings 32. In this latter respect it is remarked that, typically, it is aimed at a core hardness value of 520 HV1.0 or more, a surface hardness value of 875 HV0.1 or more and at a thickness of the nitrided surface layer, alternatively denoted nitrogen diffusion zone, in the range from 19 to 37 µm.

Finally, a number of the thus processed steel rings 32 are radially stacked, i.e. are nested, to form the ring set 31, as is further indicated in figure 3 in the last depicted eleventh process step XI. Obviously, the steel rings 32 of the ring set 31 have to be suitably dimensioned there for, e.g. have to differ slightly in circumference length to allow the steel rings 32 to be fitted one around the other. To this end the subsequent steel rings 32 of the ring set 31 are typically purposively selected in a prior, i.e. tenth process step X, from a stock of steel rings 32 of different, but known circumference length.

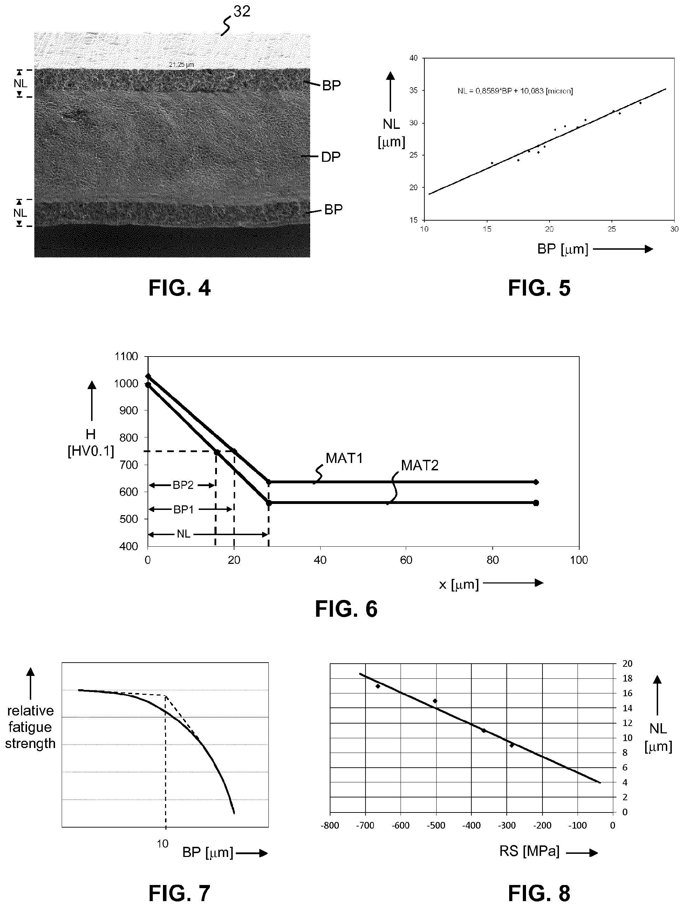

When the thus processed steel ring 32 is individually tested by subjecting it to a tensile strength test, the fractured surface shows both a ductile fracture part DP and two brittle fracture parts BP extending towards the side faces of the ring 32 from within the nitride layer NL. Figure 4 includes a representative, photographic example of the fractured surface of the steel ring 32, illustrating the different textures of the ductile fracture part DP and two brittle fracture parts BP and indicating the extent of the nitride layer NL that is, however, hardly discernible in this figure 4. The extent or layer thickness of the brittle fracture part BP is directly correlated to the extent or thickness of the nitride layer NL, at least given a certain composition of the ring base material of the steel ring. An example of such correlation is given by the graph of figure 5 that links a measured brittle fracture layer thickness BP to a unique value of the nitride layer thickness NL. The graph of figure 5 may be favourably relied upon in mass-manufacture of the steel ring 32 a predetermined reference graph (or linear equation) for checking the nitride layer thickness NL of a (random) sample thereof, by means of a simple tensile strength test.

The graph of figure 6 relates to a further material property of the steel ring 32, namely the measured hardness H thereof in Vickers hardness with 100 gr. force ([HV0.1]), which property is plotted in relation to a distance x from its outer surface in microns for two different base materials MAT1, MAT2. In either case, i.e. for both MAT1 and MAT2, the steel ring 32 is provided with a nitride layer NL extending inward from its outer surface for 28 microns. Steel rings 32 made of these two base materials MAT1, MAT2 were subjected to the tensile strength test, which resulted in a brittle fracture layer thickness BP1 of 20 microns for a first base material MAT1 and of a brittle fracture layer thickness BP2 of 16 microns for a second base material MAT2. For the sake of completeness, it is noted that the graph of figure 5 has been obtained with steel rings 32 made from the first base material MAT1 mentioned above in relation to figure 6.

As appears from figure 6, for both base materials MAT1 and MAT2, the extent of the brittle fracture BP is linked to the hardness H of the steel ring 32 of 750 HV0.1 or more. Indeed, if the hardness H of the steel ring 32 is kept below such limit value of 750 HV0.1, the fractured surface thereof resulting from the tensile strength test does not show a brittle fracture part BP at all. Based on this latter observation, it is presently considered that, by providing the steel rings 32 with a surface hardness H of less than 750 HV0.1, the ductility of the steel ring 32 is optimal in terms of the fatigue strength of an individual steel ring 32. Still, for the practical use of the steel ring 32 as part of the ring set 31 of the drive belt 3, the extent of the brittle fracture part BP may amount to up to about 10 microns, because below this value any improvement in the fatigue strength of the steel ring 32 is comparatively small, as illustrated in figure 7. When this boundary value of 10 microns for the thickness of the brittle fracture part BP is applied as an input for the graph of figure 5, a boundary value of about 18 microns is obtained for the thickness of the nitride layer NL. In turn, this boundary value of 18 microns for the nitride layer NL can be linked to a certain level of the compressive residual stress. In this latter respect, the graph of figure 8 provides the residual stress RS that is measured in the outer surface layer of the steel ring 32 in dependency on the thickness of the nitride layer NL thereof.

As appears from figure 8, a boundary value of the residual stress RS at the surface of the steel ring 32 of about minus (i.e. compressive) 650 MPa is applicable to the said boundary nitride layer thickness NL of 18 microns. Furthermore, the above-mentioned preferred lower limit for the residual stress RS of -600 MPa corresponds to the nitride layer thickness NL of 16 microns. Finally, it is noted that the lower limit value of the nitride layer thickness NL of 10 microns corresponds to a residual stress RS of about -350 MPa.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. Ring set (31) for a drive belt (3) for a continuously variable transmission, in which drive belt (3) the ring set (31) is located in a recess of the transverse elements (33) of the drive belt (3) and serves to guide the transverse elements (33) of the drive belt (3) in the circumference direction thereof, which ring set (31) is composed of a number of mutually concentrically nested steel rings (32), each having a thickness in the range between 150 and 200 micrometer, in particular of about 185 micrometer, and each having a nitride layer (NL), **characterized in that** those steel rings (32) of the ring set (31) that are located between the innermost steel ring (32) and the outermost steel ring (32) thereof are provided with a compressive internal residual stress (RS) in the vicinity of their respective outer surfaces having a value in the range between 350 and 650 MPa obtained by a nitride layer having a thickness in the range between 10 and 18 micrometer and **in that**, at least at the radial inner side of the innermost steel ring (32) of the ring set (31) and preferably also at the radial outer side of the outermost steel ring (32) of the ring set (31), a compressive internal residual stress (RS) is provided having a value of more than 750 MPa.

2. The ring set (31) according to the claim 1, **characterized in that**, at least those steel rings (32) of the ring set (31) that are located between the innermost steel ring (32) and the outermost steel ring (32) thereof have a surface hardness value of less than 750 HV0.1.

## Patentansprüche

1. Ringsatz (31) für einen Antriebsriemen (3) für ein stufenloses Getriebe, wobei in dem Antriebsriemen (3) der Ringsatz (31) in einer Vertiefung der Querelemente (33) des Antriebsriemens (3) positioniert ist und zum Führen der Querelemente (33) des Antriebsriemens (3) in der Umfangsrichtung davon dient, wobei der Ringsatz (31) aus einer Anzahl konzentrisch miteinander verschachtelter Stahlringe (32) zusammengesetzt ist, die jeweils eine Dicke im Bereich von 150 bis 200 µm, insbesondere von etwa 185 µm, aufweisen und jeweils eine Nitridschicht (NL) aufweisen, **dadurch gekennzeichnet, dass** die Stahlringe (32) des Ringsatzes (31), die zwischen dem am weitesten innen liegenden Stahlring (32) und dem am weitesten außen liegenden Stahlring (32) davon positioniert sind, mit einer inneren Druck-Restspannung (RS) in der Nähe ihrer jeweiligen Außenflächen mit einem Wert im Bereich von 350 bis 650 MPa, der durch eine Nitridschicht mit einer Dicke im Bereich zwischen 10 und 18 µm erreicht wird, beaufschlagt sind, und dass zumindest auf der radial inneren Seite des am weitesten innen liegenden Stahlrings (32) des Ringsatzes (31) und vorzugsweise auch auf der radial äußeren Seite des am weitesten außen liegenden Stahlrings (32) des Ringsatzes (31) eine innere Druck-Restspannung (RS) mit einem Wert von mehr als 750 MPa vorliegt.

2. Ringsatz (31) nach Anspruch 1, **dadurch gekennzeichnet, dass** zumindest die Stahlringe (32) des Ringsatzes (31), die zwischen dem am weitesten innen liegenden Stahlring (32) und dem am weitesten außen liegenden Stahlring (32) davon positioniert sind, einen Oberflächenhärtewert von weniger als 750 HV0.1 aufweisen.

## Revendications

1. Ensemble d'anneaux (31) pour une courroie d'entraînement (3) pour une transmission à variation continue, dans laquelle courroie d'entraînement (3) l'ensemble d'anneaux (31) est situé dans un évidement des éléments transversaux (33) de la courroie d'entraînement (3) et sert à guider les éléments transversaux (33) de la courroie d'entraînement (3) dans la direction circonférentielle de celle-ci, lequel ensemble d'anneaux (31) est composé d'un nombre d'anneaux en acier mutuellement concentriquement emboîtés (32), chacun ayant une épaisseur dans la plage entre 150 et 200 micromètres, en particulier d'environ 185 micromètres, et chacun ayant une couche de nitrure (NL), **caractérisé en ce que** les anneaux en acier (32) de l'ensemble d'anneaux (31) qui sont situés entre l'anneau en acier le plus intérieur (32) et l'anneau en acier le plus extérieur (32) de celui-ci sont pourvus d'une contrainte de compression résiduelle interne (RS) dans le voisinage de leurs surfaces extérieures respectives ayant une valeur dans la plage entre 350 et 650 MPa obtenue par une couche de nitrure ayant une épaisseur dans la plage entre 10 et 18 micromètres et **en ce que**, au moins sur le côté intérieur radial de l'anneau en acier le plus intérieur (32) de l'ensemble d'anneaux (31) et de préférence également sur le côté extérieur radial de l'anneau en acier le plus extérieur (32) de l'ensemble d'anneaux (31), une contrainte de compression résiduelle interne (RS) est prévue ayant une valeur supérieure à 750 MPa.

2. Ensemble d'anneaux (31) selon la revendication 1, **caractérisé en ce qu'**au moins les anneaux en acier (32) de l'ensemble d'anneaux (31) qui sont situés entre l'anneau en acier le plus intérieur (32) et l'anneau en acier le plus extérieur (32) de celui-ci ont une valeur de dureté de surface inférieure à 750 HV0,1.
